(19) Europäisches Patentamt
European Patent Office
Office européen des brevets

(11) Publication number: 0 041 617
A1

(12) # EUROPEAN PATENT APPLICATION

(21) Application number: 81103532.8

(22) Date of filing: 08.05.81

(51) Int. Cl.$^3$: C 08 L 23/02
C 08 J 3/24

(30) Priority: 09.05.80 US 148377

(43) Date of publication of application:
16.12.81 Bulletin 81/50

(84) Designated Contracting States:
CH DE FR GB IT LI NL

(71) Applicant: High Voltage Engineering Corporation
South Bedford Street
Burlington Massachusetts(US)

(72) Inventor: Smuckler, Jack H.
9 Countryside Lane
Marblehead Massachusetts 01945(US)

(74) Representative: von Bezold, Dieter, Dr. et al,
Patentanwälte Dr. D. von Bezold, Dipl.-Ing. P. Schütz,
Dipl.-Ing. W. Heusler Maria-Theresia-Strasse 22
Postfach 86 02 60 D-8000 München 86(DE)

(54) **Crosslinked polyolefin compositions stabilized with thiodialkanoate polyesters.**

(57) In an antioxidant system for crosslinked polyolefin compositions consisting of a first antioxidant such as a phenolic or amine antioxidant and a second antioxidant containing a thiodialkanoate portion, the use of a thiodialkanoate polyester antioxidant which inteferes less with crosslinking than the commonly-used thiodialkanoate ester antioxidants while producing comparable or improved antioxidant protection. Suitable thiodialkanoate polyesters have the formula

$$A\text{-}(T\text{-}D)_n\text{-}T\text{-}A$$

where A is an alcohol portion, T is a thiodialkanoate portion, D is a diol portion and n is an integer.

EP 0 041 617 A1

PATENTANWÄLTE
DR. DIETER V. BEZOLD
DIPL. ING. PETER SCHÜTZ
DIPL. ING. WOLFGANG HEUSLER
MARIA-THERESIA-STRASSE 22
POSTFACH 860260
D-8000 MUENCHEN 86

40FP059

USSN 148,377 11030EP

High Voltage Engeneering Corporation
South Bedford Street, BURLINGTON, Mass.
U.S.A.

Crosslinked Polyolefin Compositions
Stabilized With Thiodialkanoate Polyesters

## Background of the Invention

This invention relates to antioxidant systems suitable for use in polyolefin compositions which are crosslinkable either by irradiation or by chemical means. Particularly these antioxidant systems are effective while exhibiting greater crosslinking efficiency of the polyolefin compositions then previously known antioxidant systems.

Polyolefins are easily degraded by oxidation especially at elevated temperatures. It is well known that hindered phenols are effective antioxidants in polyolefins. Aromatic amines are also well known antioxidants although their tendency to dis-color light-colored products limits their usefulness. As is disclosed in US-A-2,519,755, thiodipropionates are also satisfactory antioxidants for poly-

COMPLETE DOCUMENT

ethylene. US-A-3,344,113 discloses a stabilizer for polypropylene comprising thiodipropionic acid esters of a mixture of lauryl and stearyl alcohols. US-A-3,501,520 discloses thiodicarboxylic acid thioether esters blended with alkylene phenols and phenolic sulfides as antioxidants for poly-alpha-olefins. US-A-3,523,083 discloses a synergistic mixture of a butylated, styrenated cresol and certain esters of thiodipropionic acid as effective stabilizers for mineral oils.

Crosslinked polyolefin compositions are often used at elevated temperatures where uncrosslinked polyolefin compositions would melt or deform. Such crosslinked polyolefin compositions must be formulated with sufficient levels of antioxidants to withstand oxidation at temperatures above those to which uncrosslinked polyolefin compositions might normally be exposed. Furthermore, during irradiation or chemical crosslinking much of the antioxidant is consumed so that it no longer functions as an antioxidant. This creates a two-fold problem. The consumption of the antioxidant (1) reduces the crosslinking efficiency of either irradiation or chemical crosslinking and (2) leaves the crosslinked polyolefin composition vulnerable to oxidation. Increasing the quantity of antioxidant, or the amount of irradiation of chemical crosslinking agents, does not overcome this problem.

Thiodialkanoic esters such as dilauryl thiodipropionate and distearyl thiodipropionate which are so commonly used with hindered phenols as antioxidants in polyolefin compositions are particularly adversely affected by both irradiation and chemical crosslinking agents, producing compositions with either low levels of crosslinking, poor oxidation resistance, or both.

It has been found that polyesters of thiodialkanoic acids when formulated into polyolefin compositions in combination with other antioxidants such as hindered phenols and aromatic amines do not interfere appreciably with cross-linking by either irradiation of chemical means and still impart satisfactory oxidation resistance. Thiodialkanoic polyesters referred to in this invention are those disclosed in US-A-3,157,517, 3,378,516, 3,466,323 and 3,590,056 granted to C.T. Tholstrup et al and assigned to Eastman Kodak Company. While the use of thiodialkanoic polyesters as antioxidants in polyolefins is known, hitherto it was not known that they have the unexpected property of not interfering in crosslinking reactions generated by irradiation or chemical means while still retaining their antioxidant properties.

Reinforcing fillers such as carbon black and fumed silica can be used in polyolefin compositions. Reinforcing fillers when used in crosslinked polyolefin compositions produce compositions which have unusually high physical properties particularly at elevated temperatures. Unfortunately, reinforcing fillers tend to impair the oxidation resistance of these compositions. It has been found that compositions containing reinforcing fillers and thiodialkanoate polyesters are not only more easily crosslinked by irradiation or chemical means but especially those compositions containing fumed silica have better oxidation resistance compared to compositions containing the commonly used thiodialkanoate esters.

It is an object of this invention to provide a crosslinked polyolefin composition containing an antioxidant system which is more easily crosslinkable than previously-known composition.

It is an object of this invention to provide a crosslinked polyolefin composition containing an antioxidant system which has comparable or better oxidation resistance than previously-known compositions.

It is a further object of this invention to provide a crosslinked polyolefin composition containing a reinforcing filler and an antioxidant system which is more easily crosslinkable than previously-known compositions.

It is still a further object of this invention to provide a crosslinked polyolefin composition containing a reinforcing filler and an antioxidant system which has comparable or better oxidation resistance than previously-known compositions.

Summary of the Invention

In an antioxidant system for crosslinked polyolefin compositions consisting of a first antioxidant such as a phenolic or amine antioxidant and a second antioxidant containing a thiodialkanoate portion, the use of a thiodialkanoate polyester antioxidant which interferes less with crosslinking than the commonly-used thiodialkanoate ester antioxidants while producing comparable or improved antioxidant protection. Suitable thiodialkanoate polyesters have the formula

$$A-(T-D)_n-T-A$$

where A is an alcohol portion, T is a thiodialkanoate portion, D is a diol portion and n is an integer.

Preferred Embodiment of the Invention

This invention provides an antioxidant system for crosslinked polyolefin compositions which interferes less

with crosslinking than commonly-used antioxidant systems while providing comparable or improved antioxidant protection. This invention is based on the discovery that thiodialkanoate polyester antioxidants interfere less with the irradiation or chemical crosslinking of polyolefin compositions than commonly-used thiodialkanoate ester antioxidants while providing comparable or improved antioxidant protection. The preferred thiodialkanoate polyesters provided by this invention are disclosed in U.S. Patents 3,157,517, 3,378,516, 3,466,323 and 3,590,056 granted to C.T. Tholstrup et al and assigned to Eastman Kodak Company. They have an average molecular weight of from about 500 to about 4000 and have the formula

$$A-(T-D)_n-T-A$$

where A is an alcohol portion, T is a thiodialkanoate portion, D is a diol portion and n is an integer. Examples of alcohols which can be used are methanol,ethanol,butanol, isobutanol, 2-ethylhexanol, 2,2-dimethylpentanol, 2,2,4-trimethylpentanol, stearyl alcohol, etc. Examples of thioalkanoic acids which can be used are 3,3'-thiodipropionic acid; 4,4'-thiodibutyric acid; thiodipinalic acid; etc. Examples of diols which can be used are neopentyl glycol; 2,3-diethylpropanediol-1,3; 2-ethyl-2-butylpropanediol-1,3; 2-ethyl-2-propylpropanediol-1,3; 2-ethyl-2-methylpropanediol-1,3; 1,1-cyclohexane-dimethanol; 1,2-cyclohexanedimethanol, 1,3 cyclohexanedimethanol; 1,4-cycohexanedimethanol; 2,2,4,4,-tetramethyl-1,3-cyclobutanediol; etc.

Methods for making polyesters of this type are well known. For example, n+l moles of thiodialkanoic acid can be reacted with n moles of glycol (where n is an integer greater than 1) using any of the ester interchange catalysts known to the art. To produce relatively low molecular weight polyester an appropriate chain-terminating agent

such as a monohydric alcohol can be used.

The crosslinkable polyolefins protected by the antioxidant system of this invention are homopolymers or copolymers of mono-1-olefins having from 2 to 8 carbons and their mixtures. Polymers of ethylene, propylene, butene-1, hexene-1, octene-1, and the like as well as copolymers of two mono-1-olefins such as ethylene and propylene, ethylene and butene-1, and the like, can be used. Other polymers that can be stabilized according to this invention include copolymers of mono-1-olefins copolymerized with monomers such as vinyl acetate, vinyl chloride, methyl methacrylate, ethyl methacrylate, methyl acrylate, acrylic acid, styrene acrylonitrile, acrolein and the like. Specific copolymers include ethylene-propylene copolymer, ethylene vinyl acetate copolymer, ethylene ethyl acrylate, as well as mixtures of such copolymers with olefin polymers. Crosslinkable polyolefins which exhibit improved oxidation resistance when compounded with thiodipropionate esters or with blends of thiodipropionate esters and other antioxidants can be used with the antioxidant system of this invention.

The thiodialkanoate polyesters of this invention can be used in combination with all the antioxidants with which thiodialkanoate esters can be used. The patent literature discloses many combinations including the following:

US-A-3,072,603, with phenyl substituted amines,
US-A-3,190,852, with polyphenols,
US-A-3,227,767, with phenols,
US-A-3,255,136, with phenyl phosphites,
US-A-3,357,946, with trihydroxyaryl hydrocarbons,
US-A-3,409,587, with organic phosphites,
US-A-3,445,424, with benzophenones and phenolics,
US-A-3,451,932, with phosphothionates,

US-A-3,454,523, with phenolics and phenyl salicylates.

The crosslinked polyolefin compositions of this invention can be provided both by chemical or irradiation means. Suitable chemical crosslinking agents are organic peroxides such as dicumyl peroxide; di-tert-butyl peroxide, 2,5-bis (tert-amylperoxy)-2,5-dimethyl-hexane; 2,5-bis (tert-butylperoxy)-2,5-dimethylhexane; 2,7-dimethyl, 7-di (tert-butylperoxy) octadiyne-3,5; 2,5-dimethyl-2,5-di (peroxybenzoate) hexyne-3; 2,5-dimethyl-2,5-di (tert-butylperoxy) hexyne-3; etc.

The crosslinking of polyolefin compositions by irradiation means is discussed in many publications including, "Atomic Radiation and Polymers" by A. Charlesby, Pergamon Press, London (1960) and "An Introduction to Radiation Chemistry" by J.W. T. Spinks and R.J. Woods, John Wiley & Sons (1964). Irradiation of polyolefins is desclosed in US-A-2,855,517, 2,877,500, 2,878,174, 2,904,480, 2,960,453, 2,981,668, 3,022,543, 2,945,792, 2,948,666, 2,906,679.

The polyolefin compositions of this invention can be made more susceptible to crosslinking by either chemical or irradiation means by the addition of sensitizers or crosslinking promoters such as,

ethylene glycol dimethacrylate,
diethylene glycol dimethacrylate,
trimethylol propane trimethacrylate,
pentaerythritol tetramethacrylate,
trimethylol propane triacrylate,
triallyl trimellitate,
triallyl cyanurate,
triallyl isocyanurate,
triallyl citrate,
pentaerythritol triacrylate.

The reinforcing fillers which can be used with this invention are those disclosed in US-A-3,084,114 granted to Gilbert and Precopio and assigned to General Electric Company. They include inorganic and carbon-aceous fillers such as silica xerogels, silica aerogels, pyrogenic silicas, hydrophobic silicas, metal silicates, titanium dioxide, zinc oxides, metal carbonates, boron compounds, such as boron oxides and carbides, carbon blacks, etc.

The crosslinked polyolefin compositions can also contain other compounding ingredients such as flame retardants, colorants, extenders, etc.

The invention will be more fully understood upon referring to the following examples.

Examples 1 to 9

The compositions in grams listed in Table I were mixed on a heated 2-roll mill until homogeneous. Plaques measuring 152.4 x 152.4 mm (6 by 6 inches) and 1.524 mm (60 mils) thick were pressed at 149°C (300°F) at 1.96 kN (20 tons). Plaques were irradiated on a 3.0 million volt, 400 microampere Van de Graaff electron accelerator. The irradiation dosage for each plaque in megarads is reported in Table I.

To determine the comparative degree of crosslinking, the physical properties of the formulations were tested at 150°C on an Instron Model 1122 Universal Tensile Testing Instrument equipped with a temperature cabinet. In practice, the 100 % modulus of a composition determined at a temperature above the crystalline melt temperature of the polymer is an excellent indication of its degree of crosslinking. Specimens were pulled at 50.8 mm (2 inches) per minute at an initial jaw separation of 25.4 mm (1 inch). The modulus at 100 %

jaw separation was used to indicate 100 % modulus. Jaw separation at break was used to indicate elongation at break. Because of the height limitation of the temperature cabinet, the maximum measurable elongation was 620 percent.

Specimens were heat aged for 7 days at 121°C in an air circulating oven. The specimens were allowed to come to room temperature overnight and then tested for percent elongation at room temperature. Tests were determined on an Instron Model 1122 Universal Tensile Testing Instrument at a pull speed of 508 mm (20 inches) per minute using a 50.8 mm (2 inch) jaw separation and 25.4 mm (1 inch) bench marks. The percent elongation at break of a specimen after heat ageing is considered an excellent indication of its resistance to heat ageing.

DFD-6005, produces by Union Carbide Corporation, is a low-density polyethylene with a density of 0.92 grams per cubic centimeter and a melt index of 0.20 grams per 10 minutes. Irganox 1010, produced by Ciba-Geigy Corp., is a phenolic antioxidant, tetrakis [methylene 3-(3',5' -di-tert-butyl-4'-hydroxy-phenyl) propionate] methane. Flectol H, produced by Monsanto, is an amine antioxidant, polymerized 1,2-dihydro-2,2,4-trimethyl quinoline. Weston 618, produced by Borg Warner Chemicals, is a phosphite antioxidant, distearyl pentaerythritol diphosiphite. Dilauryl thiodipropionate is a thiodipropionate ester produced by a number of companies including American Cyanamid Company and Witco Chemical Company. Poly TDP-2000, is a thiodipropionate polyester. It is a reaction product of 3,3'thiodipropionic acid and 1,4-cyclohexyl-dimethanol partially terminated with stearyl alcohol with an average molecular weight of about 2000 produced by Eastman

Chemical Products, Inc.

In Examples 1, 2 and 3 in Table I the polyethylene protected with thiodipropionate polyester and irradiated at 10 megarads is equal in hot physical properties to similarly irradiated polyethylene containing no antioxidant. Polyethylene protected with dilauryl thiodipropionate when irradiated at 20 megarads still does not have the hot physical properties of an unprotected polyethylene irradiated at half the dosage. This clearly shows the adverse effect of the thiodipropionate ester on the irradiation sensitivity of a polyolefin polymer while the thiodipropionate polyester shows no adverse effect. Further, the heat-ageing resistance of the formulations containing the thiodipropionate ester and polyester are comparable. The unprotected polyethylene as would be expected showed poor heatageing resistance.

In examples 4, 5, 6, 7, 8 and 9 in Table I, polyethylene is protected with thiodiproprionates and in combination with phenolic, amine and phosphorous containing antioxidants. In each case, the polyethylene protected by the antioxidant system containing the thiodipropionate ester shows an adverse effect on irradiation sensitivity while the polyethylene protected by the antioxidant system containing the thiodipropionate polyester has little or no adverse effect on irradiation sensitivity. Further, the heat-ageing resistance of the formulations containing the thiodipropionate ester and polyester are comparable.

TABLE I

Table I

| | 1 | 1 | 2 | 2 | 3 | 3 | 4 | 4 | 5 | 5 |
|---|---|---|---|---|---|---|---|---|---|---|
| DFD-6005 Polyethylene | 300 | 300 | 300 | 300 | 300 | 300 | 300 | 300 | 300 | 300 |
| Irganox 1010, Antioxidant | - | - | - | - | - | - | 3 | 3 | 3 | 3 |
| Flectol H, Antioxidant | - | - | - | - | - | - | - | - | - | - |
| Weston 618, Antioxidant | - | - | - | - | - | - | - | - | - | - |
| Dilauryl Thiodipropionate | - | - | 9 | 9 | - | - | 6 | 6 | - | - |
| Poly TDP-2000, Thiodipropionate Polyester | - | - | - | - | 9 | 9 | - | - | 6 | 6 |
| Irradiation, Dosage, Megarads | 10 | 20 | 10 | 20 | 10 | 20 | 10 | 20 | 10 | 20 |
| 150°C, 100% Modulus, PSI | 19 | 42 | 7.0 | 12 | 19 | 40 | 7.4 | 12 | 18 | 36 |
| 150°C, Tensile Strength at break, PSI | >43 | 64 | >13 | >27 | >42 | 90 | >15 | >29 | >41 | 60 |
| 150°C, Elongation at break, % | >620 | 250 | >620 | >620 | >620 | 480 | >620 | >620 | >620 | 320 |
| Heat Aged at 121°C For 7 Days | | | | | | | | | | |
| R.T. Elongation at break, % | >50 | >50 | 570 | 580 | 520 | 450 | 610 | 580 | 600 | 500 |

Table I (cont'd)

| | 6 | 6 | 7 | 7 | 8 | 8 | 9 | 9 |
|---|---|---|---|---|---|---|---|---|
| DFD-6005 Polyethylene | 300 | 300 | 300 | 300 | 300 | 300 | 300 | 300 |
| Irganox 1010, Antioxidant | - | - | - | - | - | - | - | - |
| Flectol H, Antioxidant | 3 | 3 | 3 | 3 | - | - | - | - |
| Weston 618, Antioxidant | - | - | - | - | 3 | 3 | 3 | 3 |
| Dilauryl Thiodipropionate | 6 | 6 | - | - | 6 | 6 | - | - |
| Poly TDP-2000, Thiodipropionate Polyester | - | - | 6 | 6 | - | - | 6 | 6 |
| Irradiation, Dosage, Megarads | 10 | 20 | 10 | 20 | 10 | 20 | 10 | 20 |
| 150°C, 100% Modulus, PSI | 7.3 | 12 | 16 | 31 | 7.6 | 12 | 16 | 35 |
| 150°C, Tensile Strength at break, PSI | >12 | >26 | >38 | 78 | >16 | >31 | >38 | 60 |
| 150°C, Elongation at break, % | >620 | >620 | >620 | 530 | >620 | >620 | >620 | 420 |
| Heat Aged at 121°C For 7 Days | | | | | | | | |
| R.T. Elongation at break, % | 620 | 510 | 600 | 480 | 690 | 610 | 550 | 460 |

Examples 10 to 13

Table II discloses four compositions, numbered 10 through 13, and under each such number there is listed the relative weight in grams of the various components of the composition. The compositions listed in Table II were mixed on a heated 2-roll mill until homogeneous. Plaques measuring 152.4 x 152.4 mm (6 by 6 inches) and 1.524 mm (60 mils) thick were pressed at 149°C (300°F) at 1.96 kN (20 tons). Plaques were irradiated by a 3.0 million volt, 400 microampere Van de Graaff electron accelerator. The irradiation dosage for each plaque in megarads is reported in Table II.

To determine the comparative degree of crosslinking, the physical properties of the formulations were tested at 150°C on an Instron Model 1122 Universal Tensile Testing Instrument equipped with a temperature cabinet. In practice, the 100 % modulus of a composition determined at a temperature above the crystalline melt temperature of the polymer is an excellent indication of its degree of crosslinking. Specimens were pulled at 50.8 mm (2 inches) per minute at an initial jaw separation of 25.4 mm (1 inch). The modulus at 100 percent jaw separation was used to indicate 100 % modulus. Jaw separation at break was used to indicate elongation at break. Because of the height limitation of the temperature cabinet, the maximum measurable elongation was 620 percent.

Specimens were heat aged for 7 days at 175°C in an air circulating oven. The specimens were allowed to come to room temperature overnight and then tested for percent elongation at room temperature. Tests were determined on an Instron Model 1122 Universal Tensile Testing Instrument at a pull speed 508 mm of (20 inches) per minute using a 50.8 mm (2 inch) jaw separation and 25.4 mm (1 inch) bench marks. The percent elongation at break

of a specimen after heat ageing is considered an excellent indication of its resistance to heat ageing.

DFD-6005, produced by Union Carbide Corporation is a low-density polyethylene with a density of 0.92 grams per cubic centimeter and a melt index of 0.20 grams per 10 minutes. EVA-3165, produced by DuPont Company, is an ethylene vinyl acetate copolymer with 18 percent vinyl acetate content and a melt index of 0.70 grams per 10 minutes. Irganox 1010, produced by Ciba-Geigy Corporation, is a phenolic antioxidant, tetrakis[ methylene 3-(3',5'-di-tert-butyl-4'hydroxyphenyl) propionate] methane. Dilauryl thiodipropionate is a thiodipropionate ester produced by a number of companies including American Cyanamid Company and Witco Chemical Company. Poly TDP-2000 is a thiodipropionate polyester. It is a reaction product of 3,3' thiodipropionic acid an 1,4-cyclohexyl-dimethanol partially terminated with stearyl alcohol with an average molecular weight of about 2000 produced by Eastman Chemical Products, Inc.

The test results listed in Table II show that the formulations containing the thiodipropionate polyester, Poly TDP-2000 produced comparable or higher 100 % modulus at 150°C at lower irradiation dosages than formulations containing the thiodipropionate ester, dilauryl thiodipropionate. This shows that the thiodipropionate polyester did not interfere with irradiation crosslinking as much as the thiodipropionate ester. Also, the elongationg at break of samples heat aged for 7 days at 175°C was comparable for formulations containing the thiodipropionate polyester and the thiodipropionate ester. This shows that formulations containing these antioxidants were comparable in heat ageing or oxidation resistance.

TABLE II

| Composition Number: | 10 | 10 | 11 | 11 | 12 | 12 | 13 | 13 |
|---|---|---|---|---|---|---|---|---|
| DFD-6005 Polyethylene | 300 | 300 | 300 | 300 | --- | --- | --- | --- |
| EVA-3165, Ethylene Vinyl Acetate | --- | --- | --- | --- | 300 | 300 | 300 | 300 |
| Irganox 1010, Antioxidant | 3 | 3 | 3 | 3 | 3 | 3 | 3 | 3 |
| Dilauryl Thiodipropionate | 6 | 6 | --- | --- | 6 | 6 | --- | --- |
| Poly TDP-2000, Thiodipropionate Polyester | --- | --- | 6 | 6 | --- | --- | 6 | 6 |
| Irradiation Dosage, Megarads | 4 | 12 | 4 | 12 | 8 | 12 | 8 | 12 |
| 150°C, 100% Modulus, PSI | 3.1 | 8.1 | 8.8 | 28 | 21 | 29 | 38 | 49 |
| 150°C, Tensile Strength at break, PSI | >5.4 | >26 | >33 | 89 | 46 | 60 | 92 | 95 |
| 150°C, Elongation at break, % | >620 | >620 | >620 | 580 | 460 | 450 | 615 | 390 |
| Heat Aged at 175°C for 7 days | | | | | | | | |
| R.T. Elongation at break, % | * | 625 | 675 | 525 | 600 | 600 | 550 | 525 |

* Sample melted in heat-ageing oven

Examples 14 to 17

The formulations listed in Table II were repeated with the addition of an irradiation sensitizer, trimethylol propane trimethacrylate sold by Sartomer Industries, Inc. as SR-350. These new formulations as listed in Table III were prepared and tested using the same procedure described for Examples 10 to 13.

The test results listed in Table III show, as would be expected, that the addition of an irradiation sensitizer produced formulations with higher 100 % moduli at 150°C than the formulation in Table II which contain no irradiation sensitizer. More importantly regarding this invention, the formulations containing the thiodipropionate polyester produced comparable or higher 100 % moduli at 150°C at lower irradiation dosages than formulations containing thiodipropionate ester. This again shows that the thiodipropionate polyester did not interfere with irradiation crosslinking as much as the thiodipropionate ester. Also, the elongation at break of samples heat aged for 7 days at 175°C was comparable for formulations containing the thiodipropionate polyester and the thiodipropionate ester. This shows that formulations containing these antioxidants were comparable in heat ageing or oxidation resistance.

TABLE III

| Composition Number: | 14 | 14 | 15 | 15 | 16 | 16 | 17 | 17 |
|---|---|---|---|---|---|---|---|---|
| DFD-6005, Polyethylene | 300 | 300 | 300 | 300 | --- | --- | --- | --- |
| EVA-3165, Ethylene Vinyl Acetate | --- | --- | --- | --- | 300 | 300 | 300 | 300 |
| Irganox 1010, Antioxidant | 3 | 3 | 3 | 3 | 3 | 3 | 3 | 3 |
| Dilauryl Thiodipropionate | 6 | 6 | --- | --- | 6 | 6 | --- | --- |
| Poly TDP-2000, Thiodipropionate Polyester | --- | --- | 6 | 6 | --- | --- | 6 | 6 |
| SR-350, Trimethylol Propane Trimethacrylate, Irradiation Sensitizer | 6 | 6 | 6 | 6 | 6 | 6 | 6 | 6 |
| Irradiation Dosage, Megarads | 8 | 12 | 8 | 12 | 8 | 12 | 8 | 12 |
| 150°C, 100% Modulus, PSI | 9.8 | 14 | 16 | 35 | 50 | 59 | 73 | 84 |
| 150°C, Tensile Strentgh at break, PSI | 43 | 44 | 88 | 84 | 89 | 62 | 98 | 120 |
| 150°C, Elongation at break, % | 460 | 420 | 600 | 340 | 310 | 110 | 185 | 180 |
| Heat Aged at 175°C for 7 days | | | | | | | | |
| R.T. Elongation at break, % | 600 | 550 | 475 | 450 | 500 | 500 | 460 | 440 |

Examples 18 to 21

Examples 10 and 11 in Table II were repeated with the addition of reinforcing fillers, Cab-O-Sil MS-7, pyrogenic silica with a surface area of 200 square meters per gram and Sterling NS carbon black with a surface area of 25 square meters per gram, both fillers being products of Cabot Corporation. These new formulations as listed in Table IV were prepared and tested using the same procedure described for Examples 10 to 13.

The test results listed in Table IV show, as would be expected, that the addition of reinforcing fillers, especially pyrogenic silica, produced formulations with higher 100 % moduli at 150°C than the formulations in Table II which contain no reinforcing fillers. More importantly regarding this invention, the formulations containing the thiodipropionate polyester produced comparable or higher 100 % moduli at 150°C at lower irradiation dosages than formulations containing the thiodipropionate ester. This again shows that the thiodipropionate polyester did not interfere with radiation crosslinking as much as the thiodipropionate ester. Also, the elongation at break of samples heat aged for 7 days at 175°C was comparable for formulations containing carbon black and the thiodipropionate polyester and the thiodipropionate ester. This shows that formulations containing these antioxidants were comparable in heat ageing or oxidation resistance. In the case of the formulation containing pyrogenic silica and thiodipropionate polyester, this formulation had improved heat ageing or oxidation resistance compared to the formulation containing pyrogenic silica and thiodipropionate ester.

TABLE IV

| Composition Number: | 18 | 18 | 19 | 19 | 20 | 20 | 21 | 21 |
|---|---|---|---|---|---|---|---|---|
| DFD-6005, Polyethylene | 300 | 300 | 300 | 300 | 300 | 300 | 300 | 300 |
| Irganox 1010, Antioxidant | 3 | 3 | 3 | 3 | 3 | 3 | 3 | 3 |
| Dilauryl Thiodipropionate | 6 | 6 | --- | --- | 6 | 6 | --- | --- |
| Poly TDP-2000, Thiodipropionate Polyester | --- | --- | 6 | 6 | --- | --- | 6 | 6 |
| Cab-O-Sil, Reinforcing Silica Filler | 60 | 60 | 60 | 60 | --- | --- | --- | --- |
| Sterling NS, Reinforcing Carbon Black Filler | --- | --- | --- | --- | 60 | 60 | 60 | 60 |
| Irradiation dosage, Megarads | 8 | 12 | 8 | 12 | 8 | 12 | 8 | 12 |
| 150°C, 100% Modulus, PSI | 22 | 32 | 37 | 49 | 6.0 | 8.5 | 16 | 27 |
| 150°C, Tensile Strentgh at break, PSI | >59 | >94 | >100 | >160 | >21 | >34 | >61 | >110 |
| 150°C, Elongation at break, % | >620 | >620 | >620 | >620 | >620 | >620 | >620 | >620 |
| Heat Aged at 175°C for 7 days | | | | | | | | |
| R.T. Elongation at break, % | 350 | 25 | 350 | 375 | 400 | 375 | 425 | 260 |

Examples 22 to 25

The formulations listed in Table IV were repeated with the addition of an irradiation sensitizer, trimethylol propane trimetrhacrylate sold by Sartomer Industries, Inc. as SR-350. These new formulations as listed in Table V were prepared and tested using the same procedure described for Examples 10-13.

The test results listed in Table V show, as would be expected, that the addition of an irradiation sensitizer produced formulations with higher 100 % moduli at 150°C than the formulations in Table IV which contain no irradiation sensitzizer. More importantly regarding this invention, the formulations containing the thiodipropionate polyester produced comparable or higher 100 % moduli at 150°C at lower irradiation dosages than formulations containing thiodipropionate ester. This again shows that the thiodipropionate polyester did not interfere with irradiation crosslinking as much as the thiodipropionate ester. Also, the elongation at break of samples heat aged for 7 days at 175°C was comparable for formulations containing carbon black and the thiodipropionate polyester and the thiodipropionate ester. This shows that formulations containing these antioxidants were comparable in heat ageing or oxidation resistance. In the case of the formulation containing pyrogenic silica and thiodipropionate polyester, this formulation had improved heat ageing or oxidation resistance compared to the formulation containing pyrogenic silica and thiodipropionate ester.

TABLE V

| Composition Number: | 22 | 22 | 23 | 23 | 24 | 24 | 25 | 25 |
|---|---|---|---|---|---|---|---|---|
| DFD-6005, Polyethylene | 300 | 300 | 300 | 300 | 300 | 300 | 300 | 300 |
| Irganox, 1010, Antioxidant | 3 | 3 | 3 | 3 | 3 | 3 | 3 | 3 |
| Diauryl Thiodipropionate | 6 | 6 | --- | --- | 6 | 6 | --- | --- |
| Poly TDP-2000, Thiodipropionate Polyester | --- | --- | 6 | 6 | --- | --- | 6 | 6 |
| SR-350 Trimethylol Propane Trimethacrylate Irradiation Sensitizer | 6 | 6 | 6 | 6 | 6 | 6 | 6 | 6 |
| Cab-0-Sil, Reinforcing Silica Filler | 60 | 60 | 60 | 60 | --- | --- | --- | --- |
| Sterling NS, Reinforcing Carbon Black Filler | --- | --- | --- | --- | 60 | 60 | 60 | 60 |
| Irradiation Dosage, Megarads | 8 | 12 | 8 | 12 | 8 | 12 | 8 | 12 |
| 150°C, 100% Modulus, PSI | 34 | 44 | 56 | 71 | 13 | 19 | 32 | 50 |
| 150°C, Tensile Strength at break, PSI | >100 | >150 | >176 | 260 | >60 | >87 | >140 | 190 |
| 150°C, Elongation at break, % | >620 | >620 | >620 | 600 | >620 | >620 | >620 | 500 |
| Heat Aged at 175°C for 7 days | | | | | | | | |
| R.T. Elongation at break, % | 300 | 75 | 325 | 290 | 300 | 275 | 275 | 250 |

Examples 26 to 29

The examples disclosed until now are of polyolefin compositions which were cross-linked by means of an electron accelerator. As is well known in the art, polyolefins can be cross-linked by chemical means as well. A common chemical cross-linking agent for polyolefins and other polymers is dicumyl peroxide.

The compositions in grams listed in Table VI containing dicumyl peroxide were mixed until homogeneous on a heated 2-roll mill whose temperature was kept below 127°C (260°F). Plaques measuring 152.4 x 152.4 mm (6 by 6 inches) and 1.524 mm (60 mils) thick were press cured for 15 minutes at 177°C (350°F). These formulations were tested using the same procedure described for Examples 10 to 13.

The test results listed in Table VI show that the formulations containing the thiodipropionate polyester, Poly TDP-2000 produced higher 100 % moduli at 150°C when chemically crosslinked than formulations containing the thiodipropionate ester, dilauryl thiodipropionate. This shows that the thiodipropionate polyester did not interfere with chemical crosslinking as much as the thiodipropionate ester. Also, the elongation at break of samples heat aged for 7 days at 175°C was comparable for formulations containg the thiodipropionate polyester and the thiodipropionate ester. This shows that formulations containing these antioxidants were comparable in heat ageing or oxidation resistance.

TABLE VI

| Composition Number: | 26 | 27 | 28 | 29 |
|---|---|---|---|---|
| DFD-6005, Polyethylene | 300 | 300 | 300 | 300 |
| Irganox 1010, Antioxidant | 3 | 3 | 3 | 3 |
| Dilauryl Thiodipropionate | 6 | --- | 6 | --- |
| Poly TDP-2000, Thiodipropionate Polyester | --- | 6 | --- | 6 |
| Dicumyl Peroxide | 6 | 6 | 6 | 6 |
| SR-350, Trimethylol Propane Trimethacrylate | --- | --- | 6 | 6 |
| Cured for 15 Minutes at 350°C | | | | |
| 150°C, 100% Modulus, PSI | 35 | 53 | 43 | 60 |
| 150°C, Tensile Strength at break, PSI | 60 | 87 | 78 | 84 |
| 150°C, Elongation at break,% | 340 | 250 | 280 | 180 |
| Heat Aged at 175°C for 7 days | | | | |
| R.T. Elongation at break, % | 510 | 450 | 440 | 425 |

Examples 30 to 33

The compositions in grams listed in Table VII were prepared and tested using the same procedure described for Examples 10 to 13. T-1018 and N-1018 are thiopropionate polyesters produced by Evans Chemetics, Inc. These products have the general formula

$$A\ (T-D)_n\ -T-A$$

where A is a stearyl alcohol, T is a thiodipropionic acid portion and D is a diol portion and n is integer. In the case of T-1018 the diol is 2,2,4,4-tetra-methyl-1,3-cyclobutanediol while in the case of N-1018 the diol is neopentyl glycol.

The tests results listed in Table VII show that the formulations containing the thiodipropionate polyesters produced comparable or higher 100 % moduli at 150°C at lower irradiation dosages than formulations containing the thiodipropionate ester, dilauryl thiodipropionate. This shows that the thiodipropionate polyesters did not interfere with irradiation crosslinking as much as the thiodipropionate ester. Also, the elongation at break of samples heat aged for 7 days at 175°C was comparable for formulations containing the thiodipropionate polyesters and the thiodipropionate ester. This shows that formulations containing these antioxidants were comparable in heat ageing or oxidation resistance.

TABLE VI

| Composition Number: | 30 | 30 | 31 | 31 | 32 | 32 | 33 | 33 |
|---|---|---|---|---|---|---|---|---|
| EVA-3165, Ethylene Vinyl Acetate | 300 | 300 | 300 | 300 | 300 | 300 | 300 | 300 |
| Irganox 1010, Antioxidant | 3 | 3 | 3 | 3 | 3 | 3 | 3 | 3 |
| Dilauryl Thiodipropionate | 6 | 6 | --- | --- | --- | --- | --- | --- |
| Poly TDP-2000, Thiodipropionate Polyester | --- | --- | 6 | 6 | --- | --- | --- | --- |
| T-1018, Thiodipropionate Polyester | --- | --- | --- | --- | 6 | 6 | --- | --- |
| N-1018, Thiodipropionate Polyester | --- | --- | --- | --- | --- | --- | 6 | 6 |
| Irradiation Dosage, Megarads | 15 | 20 | 15 | 20 | 15 | 20 | 15 | 20 |
| 150°C, 100% Modulus, PSI | 25 | 38 | 51 | 66 | 38 | 54 | 35 | 51 |
| 150°C, Tensile Strength at break, PSI | 67 | 80 | 92 | 99 | 91 | 64 | 76 | 72 |
| 150°C, Elongation at break, % | 580 | 425 | 335 | 220 | 500 | 150 | 460 | 200 |
| Heat Aged at 175°C for 7 days | | | | | | | | |
| R.T. Elongation at break, % | 610 | 550 | 530 | 500 | 550 | 525 | 550 | 500 |

CLAIMS:

1. A crosslinked polyolefin composition containing a thiodialkanoate polyester antioxidant.

2. A composition as claimed in claim 1 characterized in that it contains two antioxidants; the first consisting of the thiodialkanoate polyester antioxidant, the second consisting of a non-thiodialkanoate antioxidant.

3. A composition according to claim 2 wherein said non-thiodialkanoate antioxidant consists of a phenolic, amine or organic phosphorus antioxidant.

4. A composition according to claim 1, 2 oder 3 wherein said thiodialkanoate polyester antioxidant has the formula

$$A-(T-D)_n-T-A$$

where A is an alcohol portion, T is a thiodialkanoate portion, D is a diol portion and n is an integer.

5. A composition according to claim 1, 2 or 3 wherein said thiodialkanoate polyester antioxidant has the formula

$$A-(T-D)_n-T-A$$

where A is a stearyl alcohol portion, T is a thiodipropionate portion, D is a diol portion chosen from 1,4-cyclohexanedimethanol, neopentyl gylcol, or 2,2,4,4-tetrametyhl-1,3-cyclobutanediol and n is an integer from 1 to 4.

6. A composition according to any of claims 1, 2 or 3 wherein said thiodialkanoate polyester antioxidant is

a thiodipropionate polyester.

7. A composition according to any of claims 1 to 6 wherein said thiodialkanoate polyester antioxidant has a molecular weight from about 500 to 5000.

8. A crosslinked polyolefin composition according to any of claims 1 to 7 crosslinked by irradiation means.

9. A crosslinked polyolefin composition according to any of claims 1 to 7 crosslinked by chemical means.

10. A crosslinked polyolefin composition according to any of claims 1 to 9 containing a crosslinking sensitizer.

11. A crosslinked polyolefin composition according to any of claims 1 to 10 containing a reinforcing filler.

12. A crosslinked polyolefin composition according to any of claims 1 to 11 containing a homopolymer or copolymer of mono-1-olefins having 2 to 8 carbons and their mixtures.

13. A crosslinked polyolefin composition according to any of claims 1 to 12 containing a copolymer of a mono-1-olefin copolymerized with monomers such as vinyl acetate, vinyl chloride, methyl methacrylate, ethyl methacrylate, methyl acrylate, acrylic acid, styrene acrylonitrile or acrolein.

European Patent Office

# EUROPEAN SEARCH REPORT

Application number
EP 81 10 3532

## DOCUMENTS CONSIDERED TO BE RELEVANT

| Category | Citation of document with indication, where appropriate, of relevant passages | Relevant to claim |
|---|---|---|
| X | US - A - 4 107 136 (MINAGAWA)<br>* abstract; examples 79 to 88; column 13, lines 6-19; column 12, lines 42-64 *<br>--- | 1-13 |
| X | FR - A - 2 164 737 (CIBA-GEIGY)<br>* page 4, line 2 - page 5, line 31 *<br>& US 3 763 095<br>--- | 1-9 |
| | GB - A - 1 000 784 (I.C.I.)<br>* page 1, lines 20-23; claims 1,2 *<br>--- | 1-7 |
| A | GB - A - 1 012 792 (EASTMAN KODAK)<br>* claim 1 *<br>--- | 1-7 |
| A | GB - A - 1 442 266 (HERCULES)<br>* claim 1 *<br>--------- | 1-7 |

CLASSIFICATION OF THE APPLICATION (Int. Cl.3)

C 08 L 23/02
C 08 J 3/24

TECHNICAL FIELDS SEARCHED (Int. Cl.3)

C 08 L 23/02
C 08 J 3/24
7/10

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 23-09-1981 | GOOVAERTS |